# EUROPÄISCHE PATENTSCHRIFT

(11) **EP 3 757 499 B1**
(45) Veröffentlichungstag und Bekanntmachung des Hinweises auf die Patenterteilung: **28.09.2022**
(21) Anmeldenummer: 20174592.4
(22) Anmeldetag: 14.05.2020
(51) Int. Cl.: F28D 7/10, F28F 9/02, F28F 9/26, F28F 19/00

(54) **RÖHRENWÄRMETAUSCHER**
TUBULAR HEAT EXCHANGER
ÉCHANGEUR DE CHALEUR À TUBES

(30) Priorität: 26.06.2019 DE 102019209222
(43) Veröffentlichungstag der Anmeldung: 30.12.2020
(73) Patentinhaber: KRONES Aktiengesellschaft, 93073 Neutraubling (DE)
(72) Erfinder: Oehmichen, Thomas, 93073 Neutraubling (DE); Scherer, Christoph Hans, 93073 Neutraubling (DE); Justl, Florian, 93073 Neutraubling (DE); Feilner, Roland, 93073 Neutraubling (DE)
(74) Vertreter: Grünecker Patent- und Rechtsanwälte PartG mbB

(56) Entgegenhaltungen:
- CH-A- 524 122
- DE-A1-102008 038 140
- US-A- 4 207 944

## Beschreibung

Die Erfindung betrifft einen Röhrenwärmetauscher nach dem Oberbegriff des Anspruchs 1. So ein Röhrenwärmetauscher ist aus US 4 207 944 bekannt.

Röhrenwärmetauscher weisen in der Regel ein Gehäuse auf, in dem eine Mehrzahl von Röhren angeordnet ist, die im Wesentlichen parallel verlaufen. Im Betrieb strömt ein erstes Medium im Inneren der Röhren und ein zweites Medium, auch Sekundärmedium genannt, umströmt die Röhren im Inneren des Gehäuses.

Der Bereich, in dem das erste Medium strömt, wird als Primärseite des Röhrenwärmetauschers bezeichnet und der Bereich des Wärmetauscherinneren, in dem das zweite Medium strömt, wird als Sekundärseite des Röhrenwärmetauschers bezeichnet.

An mindestens einem Ende wird das Gehäuses mittels einer Flanschplatte abgeschlossen, die auch ein Anschlussstück zu anderen Prozessbereichen darstellt. Die Flanschplatte ist derart ausgebildet, dass sie Durchgänge aufweist, durch die das erste Medium aus dem Röhrenwärmetauscher ausströmen kann. Die Röhren können an diese Durchgänge angesetzt werden. In diesem Fall ist der Innendurchmesser der Durchgänge derart gewählt, dass dieser dem Innendurchmesser der Röhren entspricht. Alternativ können die Röhren in die Durchgänge hineingesteckt werden. In diesem Fall ist der Innendurchmesser der Durchgänge vorzugsweise derart gewählt, dass der Außendurchmesser der Röhren möglichst nur unwesentlich kleiner ist als der Innendurchmesser der Durchgänge. Durch Verschweißen der Röhren und der Flanschplatte werden die Röhren befestigt und die Verbindung zwischen Flanschplatte und Röhren wird abgedichtet. Somit ermöglicht die Flanschplatte, die Röhren stabil zu positionieren, die beiden Medien zuverlässig voneinander zu trennen und das Innere des Röhrenwärmetauschers nach außen hin abzudichten.

Bei diesen Röhrenwärmetauschern ist dabei die Oberfläche der Innenseite der Flanschplatte eben und im Wesentlichen senkrecht zu den Röhren.

Als Alternative ist bekannt, hohlzylinderförmige Verlängerungen der Durchgänge zum Wärmetauscherinneren hin vorzusehen, deren Innenwand am Wärmetauscherinneren zugewandten Ende eine Stufe aufweist. Die Stufe ist so geformt, dass der dem Wärmetauscherinneren zugewandte Abschnitt der Verlängerung einen Innendurchmesser aufweist, der unwesentlich größer als der Außendurchmesser der Röhre ist, und der andere Abschnitt der Verlängerung einen Innendurchmesser aufweist, der dem Innendurchmesser der Röhre und des Durchgangs entspricht. Das Ende jeder Röhre wird der Seitenwand der jeweiligen Verlängerung verschweißt.

Auch bei diesen Röhrenwärmetauschern ist, mit Ausnahme der Seitenwände der Verlängerung, die Oberfläche der Innenseite der Flanschplatte eben und im Wesentlichen senkrecht zu den Röhren. Besagte Seitenwände verlaufen typischerweise parallel zu den Röhren.

Mit anderen Worten haben bekannte Röhrenwärmetauscher eine oder mehrere Flanschplatten, beispielsweise als Deckel- und/oder Bodenstück, welche auf der dem Wärmetauscherinneren zugewandten Seite (Sekundärseite) eine im Wesentlichen ebene Fläche senkrecht zu den Röhren, und somit typischerweise auch zum Gehäuse (auch Mantelrohr genannt), aufweisen.

Sowohl die bekannten als auch die im Folgenden beschriebenen erfindungsgemäßen Röhrenwärmetauscher können beispielsweise so ausgebildet sein, dass das Sekundärmedium durch einen Einlauf in das Wärmetauscherinnere strömt, wo es entlang der Röhren zu einem Auslauf, durch den es das Wärmetauscherinnere verlässt, strömt und dabei die Röhren umströmt. Die Strömungsrichtung im Zulauf und/oder im Ablauf, also die Zuströmrichtung bzw. Ausströmrichtung, kann dabei insbesondere senkrecht zu der Längsrichtung der Röhren sein. Das heißt, die Längsrichtung von Rohren oder Stutzen, die den Einlauf bzw. Auslauf bilden kann senkrecht zu der Längsrichtung der Röhren sein.

Bei der bekannten Konstruktionsweise können sich Totzonen ergeben, insbesondere in einem Bereich diametral zum sekundärseitigen Eintritt- bzw. Austritt. Mit dem Bereich "diametral zum sekundärseitigen Eintritt- bzw. Austritt" ist jener gemeint, der gegenüber dem Zulauf bzw. Ablauf des Sekundärmediums liegt. Das kann insbesondere den dem Zulauf bzw. Ablauf gegenüberliegenden Bereich der Seitenwand des Wärmetauscherinneren umfassen. Auch im zur Flanschplatte gewandten Bereich der Aushalsung des Zulaufs bzw. Auslaufs kann es einen weniger gut durchströmten Bereich geben.

Das Problem wird verstärkt, wenn die Flanschplatte ein Bodenstück bildet und die ebene Fläche waagerecht angeordnet ist. In den Totzonen sind die Strömungsgeschwindigkeiten des zweiten Mediums niedriger als in anderen Bereichen. Man bezeichnet diese Bereiche auch als Strömungsschatten. In diesen Bereichen kann sich wegen geringerer Durchspülung Produkt ablagern bzw. anbacken. Außerdem ist auch die Reinigung, beispielsweise während eines Clean-In-Place (CIP)-Prozesses, dort erschwert. Somit wird Fouling beschleunigt. Bei Produktwärmetauschern, bei denen das zweite Medium, welches die Röhren umströmt, ein Produkt darstellt, besteht dann auch die Gefahr, dass das Produkt verunreinigt wird.

Ein weiteres Problem besteht darin, dass das zweite Medium in den Bereichen der Totzonen länger verweilt als in anderen. Man erhält also ein breiteres Verweilzeitspektrum. Dieses führt zu einem ungleichmäßigen Wärmeaustausch.

Es ist also eine Aufgabe der vorliegenden Erfindung einen Röhrenwärmetauscher bereitzustellen, der Ablagerungen und Fouling reduziert und gleichmäßige Wärmetauscheigenschaften und ein verbessertes Reinigungsverhalten aufweist.

Die Aufgabe wird durch den Gegenstand des Anspruchs 1 gelöst.

Mit anderen Worten weist die Flanschplatte eine unebene, also dreidimensionale Flanschfläche auf der Sekundärseite auf, beispielsweise eine einfach oder mehrfach gewölbte Fläche. Eine solche Konfiguration ermöglicht, gezielt die Strömung im Bereich um die Flanschfläche zu beeinflussen, insbesondere in ausgewählten Bereichen zu beschleunigen. Die Flanschplatte hat also eine Flanschfläche mit Erhebungen bzw. Formflächen.

Dabei können die tiefsten Punkte der zwischen den Stutzen liegenden Abschnitte der Flanschfläche zumindest teilweise auf unterschiedlichen Ebenen senkrecht zur Erstreckungsrichtung der Aufnahmestutzen bzw. den Durchgängen liegen. Das heißt, dass beispielsweise in einem Querschnitt mit einer Schnittebene parallel zu besagter Erstreckungsrichtung, der durch einen ersten, zweiten und dritten Aufnahmestutzen (bzw. Durchgang) verläuft, die minimale Höhe des Reliefs zwischen einem ersten und einem zweiten Aufnahmestutzen (bzw. Durchgang) einen anderen Wert aufweist als die minimale Höhe des Reliefs zwischen dem zweiten und dem dritten Aufnahmestutzen bzw. Durchgang.

Die zum Wärmetauscherinneren weisende Oberfläche der Flanschplatte kann insbesondere derart ausgebildet sein, dass mehr als 30 %, insbesondere mehr als 40 %, insbesondere mehr als 50 % der zum Wärmetauscherinneren weisende Oberfläche der Flanschplatte eine Krümmung ungleich 0 aufweisen. Alternativ oder zusätzlich kann die zum Wärmetauscherinneren weisende Oberfläche der Flanschplatte insbesondere derart ausgebildet sein, dass mehr als 30 %, insbesondere mehr als 40 %, insbesondere mehr als 50 % der zum Wärmetauscherinneren weisende Oberfläche der Flanschplatte eine Steigung ungleich 0 bezüglich einer zu den Aufnahmestutzen bzw. Durchgängen senkrechten Ebene aufweisen.

Bei der beanspruchten Konfiguration der Flanschplatte kann sich die Strömung an der Flanschplatte besser ausbilden. Die Flanschfläche kann insbesondere derart konturiert sein, dass die oben beschriebenen Totzonen, insbesondere im Bereich gegenüber der Eintritts- und Austrittsöffnung des Sekundärraums sowie direkt im Strömungsschatten am Ein- und Austritt, vermieden werden. Insbesondere können die Konturierungen so ausgebildet sein, dass rechte Winkel vermieden werden.

Die Flanschplatte ist also derart ausgebildet, dass die Strömung eines Mediums (zweites Medium) verbessert wird, insbesondere in den Totzonen die Strömungsgeschwindigkeit erhöht wird. Durch eine Erhöhung der Strömungsgeschwindigkeit in den Totzonen wird die Belagsbildung und Menge an Ablagerungen reduziert und die Reinigungswirkung verbessert. Außerdem wird das Verweilzeitspektrum schmaler und die Wärmetauscheigenschaften werden gleichmäßiger.

Die Flanschplatte ist derart mit den Röhren verbunden, dass ein Medium (erstes Medium) durch die Durchgänge in die Röhren einströmen oder aus den Röhren ausströmen kann.

Die Flanschplatte kann eine Mehrzahl von im Wesentlichen hohlzylinderförmigen Aufnahmestutzen jeweils zum Aufnehmen einer der Röhren des Röhrenwärmetauschers auf der dem Wärmetauscherinneren zugewandten Seite umfassen, wobei eine Außenseite der Aufnahmestutzen in die Flanschfläche mündet. Dabei ist die Flanschfläche die Ansatzfläche der Außenfläche der Aufnahmestutzen. Die Aufnahmestutzen werden auch als Ansätze für die Schweißnaht bezeichnet. Die Aufnahmestutzen können auch als Verlängerungen der Durchgänge betrachtet werden.

In einer besonderen Ausführungsform ist der Abstand zwischen den Aufnahmestutzen und der primärseitigen Fläche der Flanschplatte für alle Aufnahmestutzen konstant.

Der Innendurchmesser der Aufnahmestutzen kann insbesondere derart gewählt sein, dass die Röhren in dem Aufnahmestutzen aufgenommen werden können, wobei der Außendurchmesser der Röhren nur unwesentlich kleiner ist als der Innendurchmesser der Aufnahmestutzen. Durch Verschweißen der Röhren und der Aufnahmestutzen werden die Röhren befestigt und die Verbindung zwischen Aufnahmestutzen und Röhren wird abgedichtet. In einer alternativen Ausführungsform können die Röhren auch durch die Flanschplatte gesteckt sein. Mit anderen Worten können sich die Röhren durch die gesamte Dicke der Flanschplatte erstrecken.

Ein Relief der Flanschfläche im Querschnitt, insbesondere durch die Mittelachse der Flanschplatte, ist einfach oder mehrfach gekrümmt. Das heißt, die Krümmung kann in einem oder mehreren Bereichen des Reliefs ungleich Null sein. Das Relief kann jedoch auch Bereiche ohne Krümmung aufweisen. Die Mittelachse ist dabei eine Achse, die parallel zu den Durchgängen und durch den geometrischen Schwerpunkt der Grundfläche verläuft, bei einer kreisförmigen Grundfläche beispielsweise durch den Mittelpunkt des Kreises.

Als ein Bereich mit einem bestimmten Krümmungsvorzeichen, sprich ein konvexer oder konkaver Bereich, ist in dieser Anmeldung ein zusammenhängender Abschnitt des Reliefs zu verstehen, in dem das Krümmungsvorzeichen gleich ist, sprich, der zusammenhängende Abschnitt des Reliefs zwischen zwei benachbarten Wendepunkten. Außerdem werden auch zwei benachbarte Abschnitte, die sich an einen Durchgang oder einen Aufnahmestutzen anschließen und das gleiche Krümmungsvorzeichen haben als Teil desselben Bereichs betrachtet. Das bedeutet, dass ein Bereich benachbarte Abschnitte mit gleichem Krümmungsvorzeichen umfassen kann, insbesondere auch benachbarte Abschnitte mit gleichem Krümmungsvorzeichen, die durch einen Aufnahmestutzen oder einen Durchgang getrennt sind. Mit anderen Worten kann sich ein Bereich über einen Durchgang bzw. Aufnahmestutzen hinweg erstrecken, was der Fall ist, wenn sich an beiden Seiten des Aufnahmestutzens bzw. des Durchgangs ein Abschnitt mit gleichem Krümmungsvorzeichen an den Aufnahmestutzen bzw. den Durchgang anschließt.

Die Steigung in einem, mehreren oder allen Bereichen des Reliefs kann ungleich Null sein.

Mit Querschnitt ist hier ein Querschnitt durch eine Fläche gemeint, die parallel zu den Durchgängen in der Flanschplatte bzw. den Röhren verläuft. Das Relief beschreibt den Höhenverlauf der Flanschfläche in dem jeweiligen Querschnitt. Es kann auch als Profil bezeichnet werden. Dabei kann die Höhe bezogen auf eine beliebige Referenzfläche, die senkrecht zu der Querschnittsfläche ist und zum Wärmetauscheräußeren hin derart angeordnet ist, dass sie die Flanschfläche nicht schneidet, definiert werden. Wenn die der Flanschfläche gegenüberliegende Seite der Flanschplatte, sprich die zum Wärmetauscheräußeren weisende Seite, eben ist, kann diese als Referenzfläche verwendet werden.

Die in dieser Anmeldung beschriebenen Aussagen zu den Krümmungen und Steigungen des Reliefs können grundsätzlich für Reliefs beliebig gewählter Querschnitte gelten. Insbesondere können die Aussagen beispielsweise für einen, mehrere, oder alle Querschnitte durch die Mittelachse gelten. In letzteren Fall ergibt sich dann eine Rotationssymmetrie. Die Aussagen können beispielsweise auch für alle parallelen Querschnitte entlang einer bestimmten Richtung gelten.

Das Relief weisst mindestens einen konkaven und mindestens einen konvexen Bereich auf. Das heißt, dass das Relief mindestens einen Bereich mit positiver und einen Bereich mit negativer Krümmung aufweisen kann, sprich mindestens zwei Bereiche mit entgegengesetztem Krümmungsvorzeichen. Der Betrag der Krümmung kann für das gesamte Relief gleich oder an verschiedenen Stellen des Reliefs unterschiedlich sein.

Das Relief kann einen konvexen Bereich zwischen zwei konkaven Bereichen aufweisen. Dabei kann insbesondere der konvexe Bereich die größte Höhe des Reliefs aufweisen, insbesondere an der Mittelachse der Flanschplatte oder unmittelbar angrenzend an einen Aufnahmestutzen für eine der Röhren oder einen Durchgang, durch den die Mittelachse verläuft. In einer weiteren Ausführungsform kann die Höhe des konkaven Bereichs die größte Höhe des Reliefs aufweisen.

Insbesondere kann eine Flanschplatte eine einlaufseitige Flanschplatte sein und derart ausgebildet und angeordnet sein, dass ein solches Relief entlang der Einströmrichtung des Sekundärmediums in das Wärmetauscherinnere im bestimmungsgemäßen Gebrauch vorliegt.

Bei einer derartigen Konfiguration bildet sich eine Strömung um den durch den konvexen Bereich gebildeten Kegel in der Mitte der Flanschplatte aus. Dadurch wird mehr Flüssigkeit in den Bereich diametral zum sekundärseitigen Eintritt geführt, beispielsweise in einen Bereich der Flanschplatte und/oder Seitenwand gegenüber dem Zulauf. Dies führt zu einer erhöhten Strömungsgeschwindigkeit und somit zu geringerem Fouling und verbesserter Reinigung.

Es versteht sich, dass die Flanschplatte alternativ eine auslaufseitige Flanschplatte sein und derart ausgebildet und angeordnet sein kann, dass ein solches Relief entlang der Ausströmrichtung des Sekundärmediums aus dem Wärmetauscherinneren im bestimmungsgemäßen Gebrauch vorliegt.

Es ist ebenfalls denkbar, dass sowohl die einlaufseitige als auch die auslaufseitige Flanschplatte des Wärmetauschers entsprechend ausgebildet sind.

Die minimale Höhe des Reliefs in einem ersten der beiden konkaven Bereiche kann niedriger sein als die minimale Höhe des Reliefs in dem anderen der beiden konkaven Bereiche. Insbesondere kann der gesamte konkave Bereich eine geringere Höhe haben als der gesamte konvexe Bereich.

Die Flanschplatte kann eine einlaufseitige Flanschplatte sein und der erste der beiden konkaven Bereiche kann bezüglich des anderen der beiden konkaven Bereiche stromaufwärts angeordnet sein oder die Flanschplatte kann eine auslaufseitige Flanschplatte sein und der zweite der beiden konkaven Bereiche kann bezüglich des anderen der beiden konkaven Bereiche stromaufwärts angeordnet sein. Stromaufwärts bezieht sich dabei auf die oben beschriebene Ein- bzw. Ausströmrichtung des Sekundärmediums. Mit anderen Worten kann im Falle einer einlaufseitigen Flanschplatte der erste Bereich näher am Einlauf sein als der zweite Bereich und im Falle einer auslaufseitigen Flanschplatte kann der erste Bereich näher am Auslauf sein als der zweite Bereich. Der Vorteil hiervon ist, dass ein besonders vorteilhaftes Strömungsprofil erreicht werden kann.

Das Relief kann, insbesondere genau, einen konvexen Bereich und, insbesondere genau, einen konkaven Bereich aufweisen, die zumindest teilweise auf verschiedenen Seiten der Mittelachse der Flanschplatte angeordnet sind. Dabei kann die Höhe des Reliefs im konkaven Bereich ein Minimum und im konvexen Bereich ein Maximum aufweisen. Insbesondere kann im Falle einer einlaufseitigen Flanschplatte der konkave Bereich bezüglich des konvexen Bereichs stromaufwärts angeordnet sein oder im Falle einer auslaufseitigen Flanschplatte der konvexe Bereich bezüglich des konkaven Bereichs stromaufwärts angeordnet sein. Stromaufwärts bezieht sich dabei jeweils auf die oben beschriebene Ein- bzw. Ausströmrichtung des Sekundärmediums. Mit anderen Worten kann im Falle einer einlaufseitigen Flanschplatte der konkave Bereich näher am Einlauf sein als der konvexe Bereich und im Falle einer auslaufseitigen Flanschplatte kann der konkave Bereich näher am Auslauf sein als der konvexe Bereich.

Die oben beschriebene Anordnung ermöglicht ebenfalls ein besonders vorteilhaftes Strömungsprofil.

Die Flanschfläche kann bezogen auf die Mittelachse der Flanschplatte rotationssymmetrisch und/oder achsensymmetrisch ausgeführt sein. Das bedeutet im Falle einer Rotationssymmetrie, dass das Relief für jeden Querschnitt durch die Mittelachse der Flanschplatte gleich ist. Im Falle der Achsensymmetrie bedeutet dies, dass das Relief für jeden Querschnitt durch die Flanschplatte achsensymmetrisch bezogen auf die Mittelachse ist. Andere Symmetrien der Flanschfläche sind ebenfalls denkbar, insbesondere eine Spiegelsymmetrie bezogen auf eine auf der Flanschplatte senkrecht stehenden Ebene, in der die Mittelachse der Flanschplatte verläuft.

Die Flanschfläche kann, beispielsweise bezogen auf die Mittelachse der Flanschplatte, asymmetrisch ausgebildet sein, insbesondere derart asymmetrisch ausgebildet sein, dass die Strömungsgeschwindigkeiten im Strömungsschatten erhöht werden.

Eine zum Wärmetauscheräußeren weisende Fläche der Flanschplatte kann ebenfalls, beispielsweise wie oben beschrieben, konturiert sein.

Die Flanschplatte kann mittels eines elektrochemischen Abtragungsverfahrens oder eines additiven oder generativen Fertigungsverfahrens, insbesondere 3D-Druck, hergestellt sein. Diese Fertigungsverfahren ermöglichen, kostengünstig eine Flanschplatte mit komplexer Geometrie herzustellen, ohne dabei die Oberflächengüte herabzusetzen.

Die Erfindung betrifft auch eine Anlage zum Kurzzeiterhitzen von Getränkeprodukten umfassend einen der oben beschriebenen Röhrenwärmetauscher, derart ausgebildet, dass auf der Primärseite des Röhrenwärmetauschers bereits erhitztes Produkt und auf der Sekundärseite des Röhrenwärmetauschers zu erhitzendes Produkt fließt.

Wie oben erläutert, wird dabei der Bereich, in dem im bestimmungsgemäßen Gebrauch das erste Medium strömt, als Primärseite des Röhrenwärmetauschers bezeichnet und der Bereich des Wärmetauscherinneren, in dem das zweite Medium strömt, als Sekundärseite des Röhrenwärmetauschers.

Die Anlage kann eine Abfüllanlage umfassen, insbesondere eine Getränkeabfüllanlage, zur Abfüllung von Behältern, insbesondere Getränkebehältern wie Fässer oder Flaschen.

Weitere Merkmale und Vorteile werden nachfolgend anhand der beispielhaften Figuren erläutert. Dabei zeigen:
- Figur 1: eine schematische, nicht maßstabsgetreue Querschnittsansicht eines Röhrenwärmetauschers;
- Figuren 2A bis 2C: schematische, nicht maßstabsgetreue Ansichten einer Flanschplatte nach einem ersten Beispiel nicht gemäß der Erfindung; und
- Figuren 3A bis 3C: schematische, nicht maßstabsgetreue Ansichten einer Flanschplatte nach einem zweiten Beispiel nicht gemäß der Erfindung;
- Figuren 4A bis 4H: schematische, nicht maßstabsgetreue Ansichten einer Flanschplatte gemäß einer dritten Ausführungsform und Abwandlungen dieser Flanschplatte; und
- Figur 5: einen schematischen, nicht maßstabsgetreuen Querschnitt einer Flanschplatte gemäß einer vierten Ausführungsform.

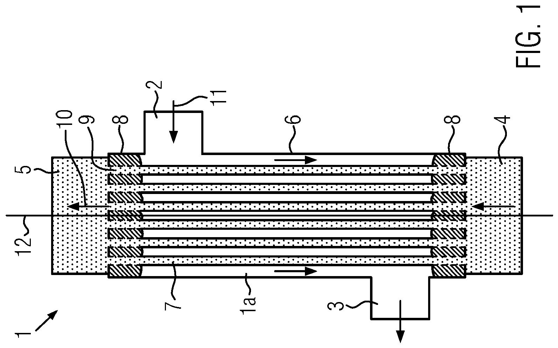

Figur 1 zeigt einen Querschnitt durch einen Röhrenwärmetauscher 1. Der Röhrenwärmetauscher umfasst einen Zulauf 2 und einen Ablauf 3 für ein zweites Medium und einen Zulauf 4 und einen Ablauf 5 für ein erstes Medium. Außerdem umfasst der Röhrenwärmetauscher ein Gehäuse 6 und innerhalb des Gehäuses angeordnete, parallel zueinander beabstandet angeordnete Röhren 7. Der Röhrenwärmetauscher umfasst hier zwei Flanschplatten 8, die jeweils Durchgänge 9 für die Röhren aufweisen. Die Röhren können sich dabei jeweils in einen Durchgang hinein (hier zur Vereinfachung nicht im Detail dargestellt) erstrecken und sind an der Flanschplatte befestigt, typischerweise verschweißt.

Die Durchgänge erstrecken sich jeweils durch die gesamte Flanschplatte. Durch diese Anordnung kann das erste Medium aus dem Zulauf 4 durch die Durchgänge der einen Flanschplatte, die Röhren 7 und die Durchgänge in der anderen Flanschplatte in den Ablauf 5 strömen. Die Strömungsrichtung ist hier mit dem Pfeil 10 gekennzeichnet.

Der Zulauf 2 und Ablauf 3 für das zweite Medium sind fluidisch mit dem durch das Gehäuse und die Flanschplatten begrenzten Innenraum 1a des Röhrenwärmetauschers (auch als Wärmetauscherinneres bezeichnet) verbunden. Durch diese Anordnung kann das zweite Medium, beispielsweise entlang der Strömungsrichtung 11, durch den Innenraum des Röhrenwärmetauschers strömen und, beispielsweise entlang der Einströmrichtung bzw. Ausströmrichtung, welche hier parallel sind und durch den Pfeil 15 gekennzeichnet sind, in das Wärmetauscherinnere hinein bzw. aus dem Wärmetauscherinneren heraus. Da die Röhren ebenfalls im Innenraum angeordnet sind, umströmt das zweite Medium dann die Röhren, so dass ein Wärmeaustausch zwischen dem ersten und dem zweiten Medium erfolgt.

Zulauf und Ablauf können jeweils auch vertauscht werden. Insbesondere können Zulauf und Ablauf nur des ersten oder nur des zweiten Mediums geändert werden. Im Gegensatz zu den in der Figur gezeigten entgegengesetzten Strömungsrichtungen im Bereich des Wärmeaustauschs, würden die beiden Medien dann in die gleiche Richtung strömen.

Das Gehäuse und die Flanschplatten können (hier aufgrund der Perspektive nicht ersichtlich) eine im Wesentlichen kreisförmige Grundfläche haben. Das Gehäuse kann insbesondere hohlzylinderförmig ausgebildet sein. Die Röhren können darin, wie in der Figur dargestellt, beispielsweise in regelmäßigen Abständen angeordnet sein. Dies ist aber nicht zwingend der Fall. Alternativ oder zusätzlich können die Röhren konzentrisch um die Mittelachse 12 des Röhrenwärmetauschers, beispielsweise des Gehäuses, und/oder einer Mittelachse 14 mindestens einer der Flanschplatten, angeordnet sein. Optional kann die Mittelachse auch durch eine der Röhren verlaufen und die übrigen Röhren konzentrisch um diese Röhre angeordnet sein, wie in Figur 1 gezeigt. Die Mittelachse 14 einer oder beider Flanschplatten kann insbesondere mit der Mittelachse 12 des Röhrenwärmetauschers übereinstimmen.

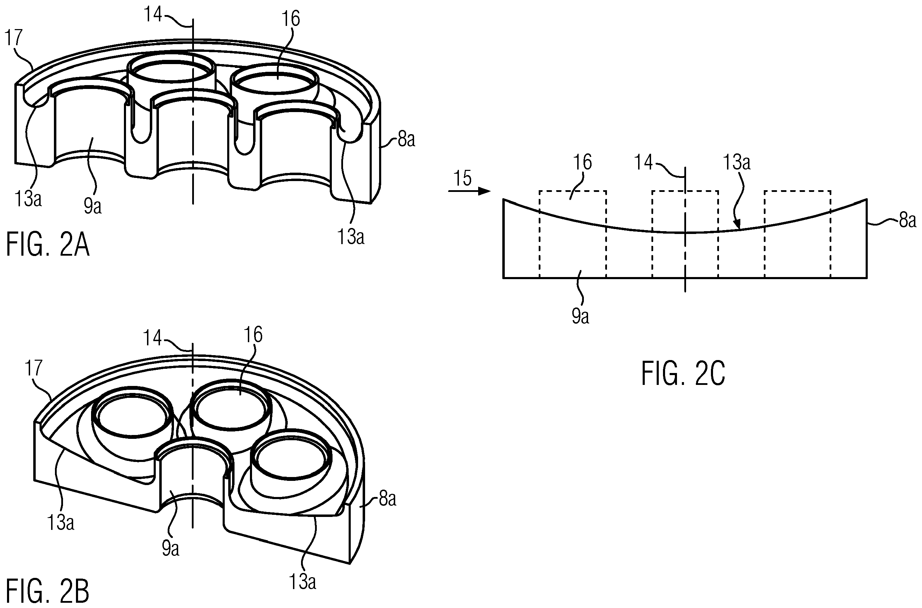

Erfindungsgemäß ist bei mindestens einer der beiden Flanschplatten eine dem Wärmetauscherinneren zugewandte Flanschfläche konturiert, was in Figur 1 für beide Flanschplatten angedeutet ist. Mögliche Ausführungen für Flanschplatten mit einer konturierten Flanschfläche werden im Folgenden beschrieben und sind in den Figuren 2 bis 5 gezeigt. Es versteht sich jedoch, dass auch Flanschplatten mit anderweitig konturierten Flanschflächen verwendet werden können.

Die Figuren 2A und 2B zeigen Schrägansichten auf die Innenseite zweier Querschnitte durch die Mittelachse 14 einer Flanschplatte 8a eines ersten Beispiels. Die Mittelachse 14 der Flanschplatte kann, wie oben erläutert, beispielsweise auch der Mittelachse 12 des Röhrenwärmetauschers entsprechen. In dieser Ausführungsform ist das Relief der Flanschfläche 13a der Flanschplatte in beiden Querschnitten ausschließlich konkav. Die Krümmung hat also überall das gleiche Vorzeichen, sie ist hier negativ. Insbesondere kann hier auch eine Rotationssymmetrie um die Mittelachse der Flanschplatte vorliegen. Dann hätte das Relief in allen, auch den hier nicht gezeigten, Querschnitten durch die Mittelachse der Flanschplatte die gleiche Form.

In den Figuren 2A bis 2C sind Aufnahmestutzen 16 und Durchgänge 9a gezeigt, wobei die Aufnahmestutzen Verlängerungen der Durchgänge darstellen und zum Aufnehmen und Befestigen der Röhren ausgebildet sind. Die Aufnahmestutzen sind hier beispielhaft derart ausgebildet, dass sie sich alle gleich weit ins Wärmetauscherinnere erstrecken, was eine einfache Befestigung ermöglicht.

Die Aufnahmestutzen können auch weggelassen werden. Dann ist jedoch aufgrund der konturierten Oberfläche zu berücksichtigen, dass die Öffnungen der Durchgänge an verschiedenen Positionen entlang der Mittelachse des Wärmetauschers angeordnet sind, so dass unter Umständen auch die Länge der Röhren angepasst werden muss.

Man kann in den Figuren 2A bis 2C erkennen, dass der Übergang zwischen den Aufnahmestutzen und der Flanschfläche kein scharfes Eck bildet, sondern abgerundet ist. Diese Abrundung ist zum Bestimmen der Krümmung und Steigung der Flanschfläche in allen hier beschriebenen Beispielen außer Acht zu lassen. Dies gilt analog für den Übergang der Flanschfläche in den Rand 17, wo ebenfalls ein abgerundetes Eck vorliegen kann.

Figur 2C zeigt schematisch die Querschnittsform, die dem Querschnitt in Figur 2A entspricht. Die gezeigte Querschnittsform ist bei einer zulaufseitigen Flanschplatte, insbesondere in einer Schnittfläche parallel zur Einströmrichtung, die hier mit dem Pfeil 15 gekennzeichnet ist, vorteilhaft. Mit dem Pfeil 15 ist dann auch die Lage des Einlaufs angedeutet, wobei der Pfeil vom Einlauf weg zeigt. Somit wird mit dem Pfeil auch die Vorzugsströmungsrichtung entlang der Flanschplatte verdeutlicht. In der schematischen Darstellung sind zur besseren Erkennbarkeit der Form der Flanschfläche die Durchgänge 9a und Aufnahmestutzen, sowie die abgerundeten Ecken, lediglich gestrichelt angedeutet und eine beispielhafte gedankliche Fortsetzung der Flanschfläche ist ebenfalls angedeutet. Es versteht sich, dass die gezeigte Form auch für eine ablaufseitige Flanschplatte verwendet werden kann, insbesondere in einer Schnittfläche parallel zur Ausströmrichtung.

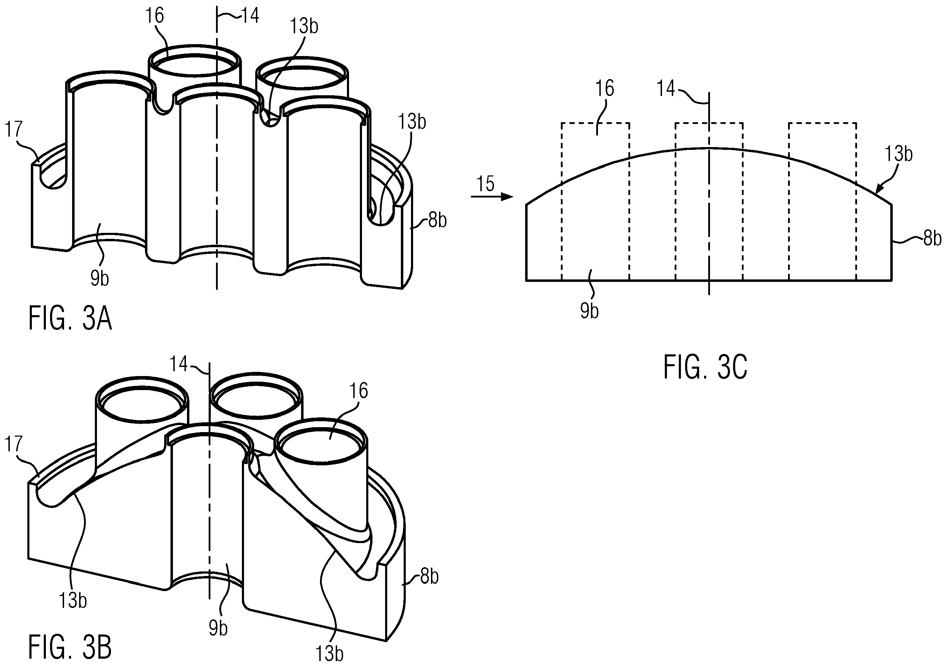

Figuren 3A und 3B zeigen Schrägansichten auf die Innenseite zweier Querschnitte durch die Mittelachse 14 einer Flanschplatte 8b eines zweiten Beispiels. Die Mittelachse 14 der Flanschplatte kann, wie oben erläutert, beispielsweise auch der Mittelachse 12 des Röhrenwärmetauschers entsprechen. In diesem Beispiel ist das Relief der Flanschfläche 13b der Flanschplatte in beiden Querschnitten ausschließlich konvex. Die Krümmung hat also überall das gleiche Vorzeichen, sie ist hier positiv. Insbesondere kann hier auch eine Rotationssymmetrie um die Mittelachse der Flanschplatte vorliegen. Dann hätte das Relief in allen, auch den hier nicht gezeigten, Querschnitten durch die Mittelachse der Flanschplatte die gleiche Form. Figur 3C zeigt schematisch die Querschnittsform, die dem Querschnitt in Figur 3A entspricht. Insbesondere kann hier auch eine Rotationssymmetrie um die Mittelachse der Flanschplatte vorliegen. Dann hätte das Relief in allen, auch den hier nicht gezeigten, Querschnitten durch die Mittelachse der Flanschplatte die gleiche Form.

Figur 3C zeigt schematisch die Querschnittsform. Die gezeigte Querschnittsform ist bei einer zulaufseitigen Flanschplatte, insbesondere in einer Schnittfläche parallel zur Einströmrichtung, die hier mit dem Pfeil 15 gekennzeichnet ist, vorteilhaft. Mit dem Pfeil 15 ist dann auch die Lage des Einlaufs angedeutet, wobei der Pfeil vom Einlauf weg zeigt. Somit wird mit dem Pfeil auch die Vorzugsströmungsrichtung entlang der Flanschplatte verdeutlicht. In der schematischen Darstellung sind zur besseren Erkennbarkeit der Form die Durchgänge und Aufnahmestutzen, sowie die abgerundeten Ecken, lediglich gestrichelt angedeutet und eine beispielhafte gedankliche Fortsetzung der Flanschfläche ist ebenfalls angedeutet. Es versteht sich, dass die gezeigte Form auch für eine ablaufseitige Flanschplatte verwendet werden kann, insbesondere in einer Schnittfläche parallel zur Ausströmrichtung.

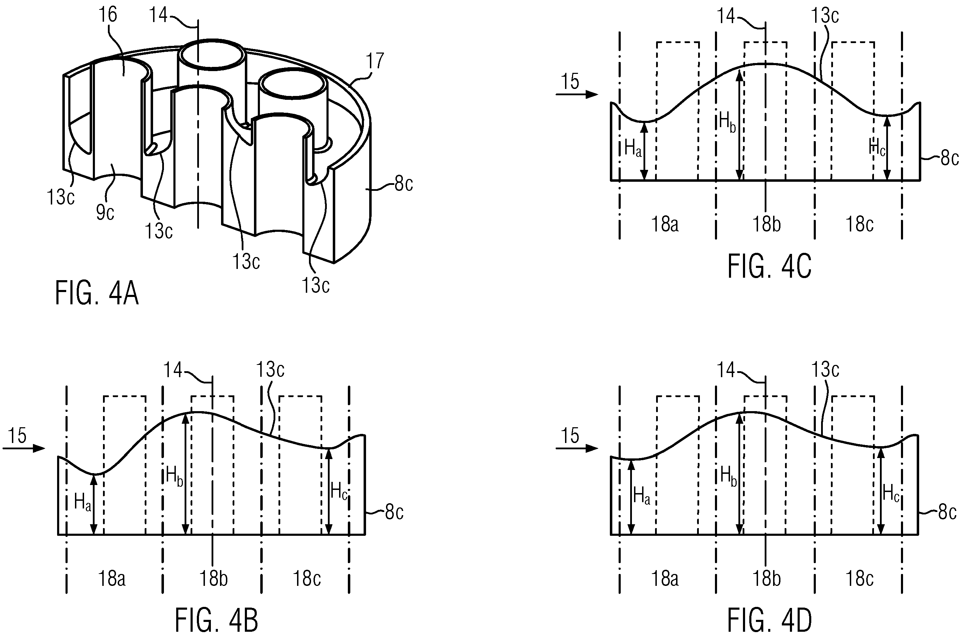

Die Figuren 4A und 4B zeigen eine Schrägansicht auf die Innenseite eines Querschnitts durch die Mittelachse 14 einer Flanschplatte 8c einer dritten Ausführungsform und eine schematische Querschnittsform. Die Mittelachse 14 der Flanschplatte kann, wie oben erläutert, beispielsweise auch der Mittelachse 12 des Röhrenwärmetauschers entsprechen.

Bei der hier gezeigten Flanschplatte weist das Relief der Flanschfläche 13c im Querschnitt durch die Mittelachse 14 der Flanschplatte im Bereich der Mittelachse einen konvexen Bereich 18b zwischen zwei konkaven Bereichen 18a, 18c auf. Das heißt, an den zentralen konvexen Bereich 18b schließt sich in beide Richtungen je ein konkaver Bereich 18a bzw. 18c an.

Wie hier erkennbar ist, hat für jeden Aufnahmestutzen die Krümmung der beiden unmittelbar an den Aufnahmestutzen angrenzt das gleiche Vorzeichen. Daher erstrecken sich die Bereiche jeweils auch über den entsprechenden Aufnahmestutzen hinweg.

Im hier gezeigten Beispiel weist das Relief in dem konvexen Bereich 18b die größte Höhe H_{b} des Reliefs auf, nämlich angrenzend an den mittleren der Aufnahmestutzen 16, durch den die Mittelachse verläuft.

Das Relief ist hier nicht symmetrisch. Die Krümmung in den beiden konkaven Bereichen ist unterschiedlich groß. Der konkave Bereich 18a geht zudem weiter nach unten als der andere konkave Bereich 18c. Das heißt, die minimale Höhe Hₐ im konkaven Bereich 18a ist niedriger als die minimale Höhe H_{c} im konkaven Bereich 18c. Alternativ kann aber auch die Höhe Hₐ kleiner als H_{c} sein. Die Höhe des Reliefs kann im gesamten konkaven Bereich 18a und/oder im gesamten konkaven Bereich 18c kleiner oder gleich sein als im gesamten konvexen Bereich 18b.

Figur 4C zeigt schematisch eine ähnliche Struktur mit einem mittigen konvexen Bereich 18b und zwei angrenzenden konkaven Bereichen 18a und 18c, wobei hier eine Symmetrie bezüglich der Mittelachse 14 der Flanschplatte vorliegt. Somit sind insbesondere Hₐ und H_{c} in diesem Beispiel gleich.

Die gezeigte Querschnittsform ist bei einer zulaufseitigen Flanschplatte, insbesondere in einer Schnittfläche parallel zur Einströmrichtung, die hier mit dem Pfeil 15 gekennzeichnet ist, vorteilhaft. Mit dem Pfeil 15 ist dann auch die Lage des Einlaufs angedeutet, wobei der Pfeil vom Einlauf weg zeigt. Somit wird mit dem Pfeil auch die Vorzugsströmungsrichtung entlang der Flanschplatte verdeutlicht. In den schematischen Darstellungen sind zur besseren Erkennbarkeit der Form die Durchgänge und Aufnahmestutzen, sowie die abgerundeten Ecken, lediglich gestrichelt angedeutet und eine beispielhafte gedankliche Fortsetzung der Flanschfläche ist ebenfalls angedeutet. Es versteht sich, dass die gezeigte Form auch für eine auslaufseitige Flanschplatte verwendet werden kann, insbesondere in einer Schnittfläche parallel zur Ausströmrichtung.

Eine weitere Abwandlung ist schematisch in Figur 4D gezeigt. Die Flanschplatte ist im Wesentlichen wie in Figur 4B ausgebildet, wobei hier die Höhe Hₐ größer ist als die Höhe H_{c}. Alternativ kann aber auch die Höhe Hₐ kleiner als H_{c} sein.

Bei den Varianten, die in Figuren 4A bis 4D gezeigt sind, bildet sich eine Strömung um den durch den konvexen Bereich gebildeten Kegelstumpf in der Mitte der Flanschplatte aus. Dadurch wird mehr Flüssigkeit in den Bereich gegenüber des Eintritts geführt. Dies führt zu einer erhöhten Strömungsgeschwindigkeit und somit zu geringerem Fouling und verbesserter Reinigung. Figuren 4A und 4B zeigen dabei eine asymmetrische Struktur, die im Vergleich zu der symmetrischen Struktur in Figur 4C eine Umlenkung der Strömung in Richtung z-Achse an der Stelle verbessert, an der die beiden Teilströmungen (um den Kegelstumpf) aufeinandertreffen.

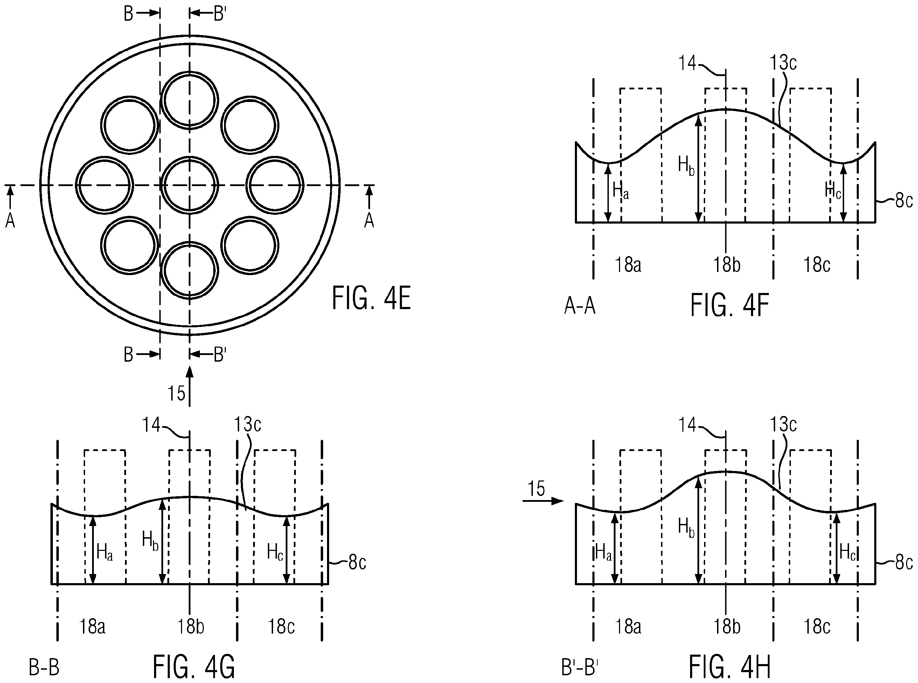

Eine beispielhafte Flanschplatte, die in den Figuren 4E bis 4H gezeigt ist, kombiniert verschiedene Profile, ähnlich zu den Figuren 4B bis 4D gezeigten Profilen.

In Figur 4E ist eine Draufsicht auf die Flanschplatte gezeigt, darin ist eine Ebene A-A gezeigt, die senkrecht zur Einströmrichtung 15, hier beispielhaft durch die Mitte der Flanschplatte und drei Stutzen bzw. Durchgänge, verläuft. Weiterhin sind zwei Ebenen B-B und B'-B' gezeigt, die parallel zur Einströmrichtung verlaufen und zwar jeweils in einem Bereich zwischen den Stutzen bzw. Durchgängen und einmal im Bereich durch die Mitte der Flanschplatte, bezogen auf die Strömungsrichtung. In Figur 4F ist der Flanschplattenquerschnitt in der Ebene A-A gezeigt. In Figur 4G ist der Flanschplattenquerschnitt in der Ebene B-B gezeigt. In Figur 4H ist der Flanschplattenquerschnitt in der Ebene B'-B' gezeigt.

In diesem Beispiel sind die Werte der oben beschriebenen Größen Hₐ und H_{c} im Schnitt B'-B' gleich, wobei Hₐ = H_{c} = T₁. Im Schnitt B-B sind die Werte von Hₐ und H_{c} ebenfalls gleich, wobei Hₐ = H_{c} = T₂. Im Schnitt A-A sind die Werte von Hₐ und H_{c} ebenfalls gleich, wobei Hₐ = H_{c} = T₃. Dabei ist T₁ > T₂ > T₃. In diesem Beispiel ist der Wert der oben beschriebene Größe H_{b} im Schnitt B'-B' gleich dem Wert der Größe H_{b} im Schnitt A-A, wobei H_{b} = H₁. Im Schnitt B-B ist der Wert der Größe H_{b} gleich H₂. Dabei ist H₁ > H₂.

Bei der in den Figuren 4E bis 4H gezeigten Konfiguration wird eine Art Strömungssattel ausgebildet. Der Strömungssattel ermöglicht, dass die Strömung besser aufgeteilt, um den durch die Flanschfläche gebildeten Kegel geführt und gegenüber wieder zusammengeführt wird.

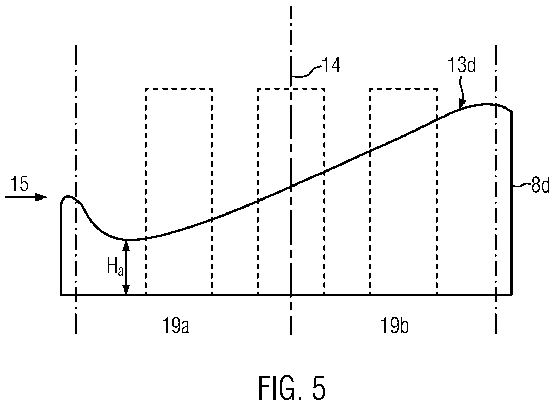

Figur 5 zeigt schematisch eine weitere mögliche Konfiguration einer Flanschplatte 8d, bei der das Relief der Flanschfläche 13d im Querschnitt durch die Mittelachse 14 der Flanschplatte einen konkaven Bereich 19a und einen konvexen Bereich 19b aufweist, die auf verschiedenen Seiten der Mittelachse der Flanschplatte angeordnet sind. In diesem Beispiel handelt es sich um eine zulaufseitige Flanschplatte. Wie durch den Pfeil 15 angedeutet, ist die gezeigte Querschnittsform insbesondere parallel zur Einströmrichtung vorteilhaft. Das heißt, beispielhaft ist hier der konkave Bereich stromaufwärts zum konvexen Bereich angeordnet, wobei sich "stromaufwärts" auf die Einströmrichtung bezieht. Im vorliegenden Beispiel weist der konkave Bereich 19a die niedrigste Höhe Hₐ des Reliefs auf. Insbesondere liegt hier der gesamte konkave Bereich tiefer als der gesamte konvexe Bereich. Das heißt, die Höhe des Reliefs ist in diesem Beispiel im gesamten konkaven Bereich 19a kleiner als im gesamten konvexen Bereich 19b. Eine Form wie in Figur 5 gezeigt ist auch für eine auslaufseitige Flanschplatte denkbar. Dann ist es vorteilhaft, wenn der konvexe Bereich stromaufwärts zum konkaven Bereich angeordnet, wobei sich "stromaufwärts" auf die Ausströmrichtung bezieht.

Auch hier sind in der schematischen Darstellung zur besseren Erkennbarkeit der Form der Flanschfläche die Durchgänge und Aufnahmestutzen, sowie die abgerundeten Ecken, lediglich gestrichelt angedeutet und eine beispielhafte gedankliche Fortsetzung der Flanschfläche ist ebenfalls angedeutet.

Es versteht sich, dass in den zuvor beschriebenen Ausführungsformen genannte Merkmale nicht auf diese speziellen Kombinationen beschränkt sind und auch in beliebigen anderen Kombinationen möglich sind.

## Patentansprüche

1. Röhrenwärmetauscher (1) umfassend mehrere Röhren (7) und mindestens eine Flanschplatte (8, 8a, 8b, 8c, 8d) mit mehreren Durchgängen (9, 9a, 9b, 9c, 9d) für die Röhren (7) und mit einer dem Wärmetauscherinneren (1a) zugewandten Flanschfläche (13a, 13b, 13c, 13d),
wobei die Flanschfläche (13a, 13b, 13c, 13d) konturiert ist,
wobei ein Relief der Flanschfläche (13a, 13b, 13c, 13d) im Querschnitt, insbesondere durch eine Mittelachse (14) der Flanschplatte (8, 8a, 8b, 8c, 8d), einfach oder mehrfach gekrümmt ist und
dadurch gekennzeichent, dass
das Relief mindestens einen konkaven Bereich (18a, 18c, 19a) und mindestens einen konvexen Bereich (18b, 19b) aufweist.

2. Röhrenwärmetauscher (1) nach Anspruch 1, wobei das Relief einen konvexen Bereich (18b) zwischen zwei konkaven Bereichen (18a, 18c) aufweist.

3. Röhrenwärmetauscher (1) nach Anspruch 2, wobei der konvexe Bereich (18b) insbesondere eine größte Höhe (H_{b}) des Reliefs aufweist, insbesondere an der Mittelachse (14) der Flanschplatte (8, 8a, 8b, 8c, 8d) oder angrenzend an einen Aufnahmestutzen (16) für eine der Röhren (7), durch den die Mittelachse (14) der Flanschplatte (8, 8a, 8b, 8c, 8d) verläuft, oder angrenzend an einen Durchgang (9, 9a, 9b, 9c, 9d), durch den die Mittelachse (14) der Flanschplatte (8, 8a, 8b, 8c, 8d) verläuft.

4. Röhrenwärmetauscher (1) nach Anspruch 2 oder 3, wobei eine minimale Höhe (Hₐ) in einem ersten Bereich (18a) der beiden konkaven Bereiche (18a, 18c) niedriger ist als die minimale Höhe (H_{c}) in dem anderen Bereich (18c) der beiden konkaven Bereiche (18a, 18c).

5. Röhrenwärmetauscher (1) nach Anspruch 4,
wobei die mindestens eine Flanschplatte eine einlaufseitige Flanschplatte umfasst und der erste der beiden konkaven Bereiche der einlaufseitigen Flanschplatte bezüglich des anderen der beiden konkaven Bereiche stromaufwärts angeordnet ist, und/oder
wobei die mindestens eine Flanschplatte eine auslaufseitige Flanschplatte umfasst und der andere der beiden konkaven Bereiche der auslaufseitigen Flanschplatte bezüglich des ersten der beiden konkaven Bereiche stromaufwärts angeordnet ist.

6. Röhrenwärmetauscher (1) nach Anspruch 1, wobei das Relief einen konkaven Bereich (19a) und einen konvexen Bereich (19b) aufweist, die auf verschiedenen Seiten einer bzw. der Mittelachse (14) der Flanschplatte (8, 8a, 8b, 8c, 8d) angeordnet sind.

7. Röhrenwärmetauscher (1) nach Anspruch 6,
wobei eine Höhe des Reliefs im konkaven Bereich (19a) ein Minimum und im konvexen Bereich (19b) ein Maximum aufweist und
wobei die mindestens eine Flanschplatte eine einlaufseitige Flanschplatte umfasst und der konkave Bereich der einlaufseitigen Flanschplatte bezüglich des konvexen Bereichs stromaufwärts angeordnet ist, und/oder
wobei die mindestens eine Flanschplatte eine auslaufseitige Flanschplatte umfasst und der konvexe Bereich der auslaufseitigen Flanschplatte bezüglich des konkaven Bereichs der auslaufseitige Flanschplatte stromaufwärts angeordnet ist.

8. Röhrenwärmetauscher (1) nach einem der vorangegangenen Ansprüche, wobei die Flanschfläche (13a, 13b, 13c, 13d) bezogen auf eine bzw. die Mittelachse (14) der Flanschplatte (8, 8a, 8b, 8c, 8d) rotationssymmetrisch und/oder achsensymmetrisch ausgebildet ist.

9. Röhrenwärmetauscher (1) nach einem der vorangegangenen Ansprüche, wobei die Flanschfläche (13a, 13b, 13c, 13d) bezogen auf eine bzw. die Mittelachse (14) der Flanschplatte (8, 8a, 8b, 8c, 8d) derart asymmetrisch ausgebildet ist, dass die Strömungsgeschwindigkeiten im Strömungsschatten erhöht werden.

10. Röhrenwärmetauscher (1) nach einem der vorangegangenen Ansprüche, wobei die Flanschplatte (8, 8a, 8b, 8c, 8d) mittels eines elektrochemischen Abtragungsverfahrens oder eines additiven oder generativen Fertigungsverfahrens, insbesondere 3D-Druck hergestellt ist.

11. Anlage zum Kurzzeiterhitzen von Getränkeprodukten umfassend den Röhrenwärmetauscher (1) gemäß einem der vorangegangenen Ansprüche, derart ausgebildet, dass auf einer Primärseite des Röhrenwärmetauschers (1) bereits erhitztes Produkt und auf einer Sekundärseite des Röhrenwärmetauschers (1) zu erhitzendes Produkt fließt.

12. Anlage nach Anspruch 11 mit einer Abfüllanlage, insbesondere Getränkeabfüllanlage, zur Abfüllung von Behältern, insbesondere Getränkebehältern wie Fässer oder Flaschen.

## Claims

1. Tubular heat exchanger (1) comprising a plurality of tubes (7) and at least one flange plate (8, 8a, 8b, 8c, 8d) having a plurality of passages (9, 9a, 9b, 9c, 9d) for the tubes (7) and having a flange surface (13a, 13b, 13c, 13d) facing the heat exchanger interior (1a),
the flange surface (13a, 13b, 13c, 13d) being contoured,
a relief of the flange surface (13a, 13b, 13c, 13d) having one or multiple curves in the cross-section, in particular through a central axis (14) of the flange plate (8, 8a, 8b, 8c, 8d), and
**characterised in that**
the relief has at least one concave region (18a, 18c, 19a) and at least one convex region (18b, 19b).

2. Tubular heat exchanger (1) according to claim 1, wherein the relief has a convex region (18b) between two concave regions (18a, 18c).

3. Tubular heat exchanger (1) according to claim 2, wherein the convex region (18b) has in particular a maximum height (H_{b}) of the relief, in particular on the central axis (14) of the flange plate (8, 8a, 8b, 8c, 8d) or adjacent to a receiving socket (16) for one of the tubes (7) through which socket the central axis (14) of the flange plate (8, 8a, 8b, 8c, 8d) extends, or adjacent to a passage (9, 9a, 9b, 9c, 9d) through which the central axis (14) of the flange plate (8, 8a, 8b, 8c, 8d) extends.

4. Tubular heat exchanger (1) according to either claim 2 or claim 3, wherein a minimum height (Hₐ) in a first region (18a) of the two concave regions (18a, 18c) is lower than the minimum height (H_{c}) in the other region (18c) of the two concave regions (18a, 18c).

5. Tubular heat exchanger (1) according to claim 4,
wherein the at least one flange plate comprises a flange plate on the inlet side and the first of the two concave regions of the flange plate on the inlet side is arranged upstream with respect to the other of the two concave regions, and/or
wherein the at least one flange plate comprises a flange plate on the outlet side and the other of the two concave regions of the flange plate on the outlet side is arranged upstream with respect to the first of the two concave regions.

6. Tubular heat exchanger (1) according to claim 1, wherein the relief has a concave region (19a) and a convex region (19b) which are arranged on different sides of a or the central axis (14) of the flange plate (8, 8a, 8b, 8c, 8d).

7. Tubular heat exchanger (1) according to claim 6,
wherein a height of the relief in the concave region (19a) has a minimum and in the convex region (19b) has a maximum and
wherein the at least one flange plate comprises a flange plate on the inlet side and the concave region of flange plate on the inlet side is arranged upstream with respect to the convex region, and/or
wherein the at least one flange plate comprises a flange plate on the outlet side and the convex region of the flange plate on the outlet side is arranged upstream with respect to the concave region of the flange plate on the outlet side.

8. Tubular heat exchanger (1) according to any of the preceding claims, wherein the flange surface (13a, 13b, 13c, 13d) is rotationally symmetrical and/or axially symmetrical with respect to a or the central axis (14) of the flange plate (8, 8a, 8b, 8c, 8d).

9. Tubular heat exchanger (1) according to any of the preceding claims, wherein the flange surface (13a, 13b, 13c, 13d) is asymmetrical with respect to a or the central axis (14) of the flange plate (8, 8a, 8b, 8c, 8d) such that the flow rates in the flow shadow are increased.

10. Tubular heat exchanger (1) according to any of the preceding claims, wherein the flange plate (8, 8a, 8b, 8c, 8d) is produced by means of an electrochemical removal method or by means of an additive or generative production method, in particular 3D printing.

11. Plant for the short-term heating of beverage products, comprising the tubular heat exchanger (1) according to any of the preceding claims, which tubular heat exchanger is designed such that the already heated product flows on a primary side of the tubular heat exchanger (1) and the product to be heated flows on a secondary side of the tubular heat exchanger (1).

12. Plant according to claim 11, comprising a filling plant, in particular a beverage filling plant, for filling containers, in particular beverage containers such as barrels or bottles.

## Revendications

1. Échangeur de chaleur à tubes (1) comprenant plusieurs tubes (7) et au moins une plaque formant bride (8, 8a, 8b, 8c, 8d) avec plusieurs passages (9, 9a, 9b, 9c, 9d) destinés aux tubes (7) et avec une surface de bride (13a, 13b, 13c, 13d) tournée vers l'intérieur de l'échangeur de chaleur (1a),
dans lequel la surface de bride (13a, 13b, 13c, 13d) est profilée,
dans lequel un relief de la surface de bride (13a, 13b, 13c, 13d) est courbé une ou plusieurs fois en coupe transversale, en particulier selon un axe central (14) de la plaque formant bride (8, 8a, 8b, 8c, 8d), et
**caractérisé en ce que**
le relief présente au moins une région concave (18a, 18c, 19a) et au moins une région convexe (18b, 19b).

2. Échangeur de chaleur à tubes (1) selon la revendication 1, dans lequel le relief présente une région convexe (18b) entre deux régions concaves (18a, 18c).

3. Échangeur de chaleur à tubes (1) selon la revendication 2, dans lequel la région convexe (18b) présente en particulier une hauteur maximale (H_{b}) du relief, en particulier au niveau de l'axe central (14) de la plaque formant bride (8, 8a, 8b, 8c, 8d) ou de manière adjacente à une tubulure de réception (16) destinée à l'un des tubes (7) à travers lequel s'étend l'axe central (14) de la plaque formant bride (8, 8a, 8b, 8c, 8d) ou de manière adjacente à un passage (9, 9a, 9b, 9c, 9d) à travers lequel s'étend l'axe central (14) de la plaque formant bride (8, 8a, 8b, 8c, 8d).

4. Échangeur de chaleur à tubes (1) selon la revendication 2 ou 3, dans lequel une hauteur minimale (Ha) dans une première région (18a) parmi les deux régions concaves (18a, 18c) est inférieure à la hauteur minimale (H_{c}) dans l'autre région (18c) parmi les deux régions concaves (18a, 18c).

5. Échangeur de chaleur à tubes (1) selon la revendication 4,
dans lequel la au moins une plaque formant bride comprend une plaque formant bride côté entrée et la première des deux régions concaves de la plaque formant bride côté entrée est agencée en amont par rapport à l'autre des deux régions concaves, et/ou
dans lequel la au moins une plaque formant bride comprend une plaque formant bride côté sortie et l'autre des deux régions concaves de la plaque formant bride côté sortie est agencée en amont par rapport à la première des deux régions concaves.

6. Échangeur de chaleur à tubes (1) selon la revendication 1, dans lequel le relief présente une région concave (19a) et une région convexe (19b), agencées sur des côtés différents d'un axe central ou de l'axe central (14) de la plaque formant bride (8, 8a, 8b, 8c, 8d), respectivement.

7. Échangeur de chaleur à tubes (1) selon la revendication 6,
dans lequel une hauteur du relief présente un minimum dans la région concave (19a) et un maximum dans la région convexe (19b), et
dans lequel la au moins une plaque formant bride comprend une plaque formant bride côté entrée et la région concave de la plaque formant bride côté entrée est agencée en amont par rapport à la région convexe, et/ou
dans lequel la au moins une plaque formant bride comprend une plaque formant bride côté sortie et la région convexe de la plaque formant bride côté sortie est agencée en amont par rapport à la région concave de la plaque formant bride côté sortie.

8. Échangeur de chaleur à tubes (1) selon l'une quelconque des revendications précédentes, dans lequel la surface de bride (13a, 13b, 13c, 13d) est réalisée avec une symétrie de rotation et/ou avec une symétrie axiale par rapport à un axe central ou à l'axe central (14) de la plaque formant bride (8, 8a, 8b, 8c, 8d).

9. Échangeur de chaleur à tubes (1) selon l'une quelconque des revendications précédentes, dans lequel la surface de bride (13a, 13b, 13c, 13d) est réalisée de manière asymétrique par rapport à un axe central ou à l'axe central (14) de la plaque formant bride (8, 8a, 8b, 8c, 8d) de telle manière que les vitesses d'écoulement sont augmentées dans les zones à faible écoulement.

10. Échangeur de chaleur à tubes (1) selon l'une quelconque des revendications précédentes, dans lequel la plaque formant bride (8, 8a, 8b, 8c, 8d) est fabriquée au moyen d'un procédé d'érosion électrochimique ou d'un procédé de fabrication additif ou génératif, en particulier d'une impression 3D.

11. Installation de pasteurisation rapide de produits de boisson comprenant l'échangeur de chaleur à tubes (1) selon l'une quelconque des revendications précédentes, réalisée de telle manière que du produit déjà chauffé circule sur un côté primaire de l'échangeur de chaleur à tubes (1) et du produit à chauffer circule sur un côté secondaire de l'échangeur de chaleur à tubes (1).

12. Installation selon la revendication 11, comprenant une installation de remplissage, en particulier une installation de remplissage de boissons, permettant de remplir des récipients, en particulier des récipients pour boissons, tels que des fûts ou des bouteilles.
